# EUROPÄISCHE PATENTANMELDUNG

(11) **EP 1 457 524 A2**
(43) Veröffentlichungstag der Anmeldung: **15.09.2004**
(21) Anmeldenummer: 04005201.1
(22) Anmeldetag: 04.03.2004
(51) Int. Cl.: C08L 63/02

(54) **Epoxidharz-Zusammensetzungen**

(30) Priorität: 12.03.2003 AT 3932003
(71) Anmelder: Surface Specialities Austria GmbH, 8402 Werndorf (AT)
(72) Erfinder: Gerlitz, Martin, Dr., 8041 Graz (AT); Gollner, Andreas, 8054 Graz (AT); Fischer, Thomas, 8010 Graz (AT)
(74) Vertreter: Deckers, Hellmuth, Dr.

(57) **Zusammenfassung**

Epoxidharz-Zusammensetzung enthaltend ein Polymerisat **BC** von Vinylmonomeren, das in Gegenwart von flüssigen Epoxidharzen **C** polymerisiert ist, sowie gegebenenfalls weitere flüssige Epoxidharze **A**, Härter sowie gegebenenfalls Füllstoffe, Verfahren zu ihrer Herstellung und ihre Verwendung zur Beschichtung von lackierten und unlackierten Metallen, insbesondere in Dickschichten

## Beschreibung

Epoxidharz-Zusammensetzungen können als Lösung in geeigneten Lösungsmitteln, als wäßrige Dispersionen oder Emulsionen, oder in unverdünnter Form (englisch "bulk") vorliegen. Bei lösungsmittelhaltigen Applikationsformen oder bei wäßrigen Emulsionen oder Dispersionen muß nach dem Auftragen das Lösungsmittel bzw. Wasser verdampfen. Dieser zusätzliche Schritt bei der Anwendung ist zeitraubend, technisch störend und aufwendig, da beispielsweise die Lösungsmitteldämpfe nicht in die Umwelt emittiert werden dürfen. Insbesondere für Dickschicht-Anwendungen ist es nachteilig, wenn Lösungsmittel oder Wasser bei der Filmbildung aus der aufgetragenen Schicht entweichen müssen. Unmodifizierte Epoxidharze sind hart und spröde; die Modifikation mit aliphatischen Polyäthern führt zu elastischeren Systemen, die jedoch eine verschlechterte Beständigkeit gegen Lösungsmittel oder Wasser haben.

Elastische Epoxidharz-Zusammensetzungen, die mit aliphatischen Polyätheraminen modifiziert sind, sind aus EP-A 0 658 584 bekannt. Diese haben jedoch den Nachteil, daß ihre Chemikalienund Lösungsmittelbeständigkeit insbesondere bei erhöhter Temperatur (beispielsweise 40 bis 60 °C) noch nicht zufriedenstellend ist.

Es besteht daher die Aufgabe, Epoxidharz-Zusammensetzungen bereitzustellen, die sich in dickeren Schichten von bevorzugt 0,5 bis 5 mm auf ein Substrat auftragen lassen und zu Beschichtungen mit elastischen Eigenschaften und guter Haftung bei guter Chemikalienbeständigkeit führen.

Diese Aufgabe wird gelöst durch die erfindungsgemäßen Epoxidharz-Zusammensetzungen.

Die Erfindung betrifft eine Epoxidharz-Zusammensetzung enthaltend ein Polymerisat **BC** von Vinylmonomeren, das in Gegenwart von flüssigen Epoxidharzen **C** polymerisiert ist, sowie gegebenenfalls weitere flüssige Epoxidharze **A**.

Weiter betrifft die Erfindung ein Verfahren zur Herstellung der erfindungsgemäßen Epoxidharz-Zusammensetzungen.

Weiter betrifft die Erfindung Epoxidharz-Zusammensetzungen, die zusätzlich Füllstoffe enthalten.

Schließlich betrifft die Erfindung die Verwendung der erfindungsgemäßen Epoxidharz-Zusammensetzungen, bevorzugt als Dickschicht-Beschichtungsmittel zur Beschichtung von Substraten in Schichtdicken von bevorzugt 0,5 bis 5 mm.

Die flüssigen Epoxidharze **A** und **C** können gleich oder verschieden sein und sind unabhängig voneinander ausgewählt aus aromatischen und aliphatischen Epoxidharzen basierend auf Glycidyläthern von ein- oder mehrwertigen Phenolen oder Alkoholen und Glycidylestern von aromatischen oder aliphatischen Carbonsäuren, insbesondere Dicarbonsäuren. Ihre Viskosität, bestimmt gemäß DIN EN ISO 3219 bei 23 °C und einer Scherrate von 100 s⁻¹ soll bevorzugt von 5 bis 20 000 mPa·s betragen. Bevorzugt sind Flüssigharze auf Basis von Glycidylestern insbesondere zweibasiger aliphatischer Carbonsäuren und von Glycidyläthern von Bisphenol A (BADGE), von ein- oder mehrwertigen aliphatischen Alkoholen und insbesondere von Polypropylenglykol jeweils mit einem spezifischen Epoxidgruppen-Gehalt von 0,5 bis 10 mol/kg, bevorzugt 1 bis 8 mol/kg, und besonders bevorzugt 2,5 bis 7 mol/kg.

Die Polymerisate **BC** von Vinylmonomeren, die in Gegenwart der Epoxidharze **C** polymerisiert werden, leiten sich ab von Mischungen von Vinylmonomeren **B,** die mindestens ein Säuregruppenhaltiges Vinylinonomer **B1** enthalten und mindestens ein weiteres Vinylmonomer ausgewählt aus solchen aliphatischen Monomeren **B2,** die außer der olefinisch ungesättigten Gruppe keine weitere funktionelle Gruppe aufweisen, aromatischen Vinylmonomeren **B4,** und Monomeren **B3,** die Hydroxylgruppen enthalten. Geeignete Monomere **B1** sind olefinisch ungesättigte Monocarbonsäuren mit 3 bis 10 Kohlenstoffatomen wie Acrylsäure, Methacrylsäure, Vinylessigsäure, Crotonsäure und Isocrotonsäure sowie Halbester von olefinisch ungesättigten Dicarbonsäuren mit aliphatischen linearen, verzweigten oder cyclischen Alkoholen wie Monomethylmaleinat oder -fumarat. Geeignete Monomere B2 sind die Alkylester von Methacrylsäure und Acrylsäure sowie die Dialkylester von Maleinsäure und Fumarsäure, wobei die Alkylgruppen linear, verzweigt oder cyclisch sein können und 1 bis 20 Kohlenstoffatome aufweisen können. Bevorzugt werden Methyl(meth)acrylat, Äthyl(meth)acrylat, die isomeren Butyl(meth)acrylate, 2-Äthylhexyl(meth)acrylat und (Iso)Bornyl(meth)acrylat. Geeignete Monomere **B3** sind 2-Hydroxyäthyl(meth)acrylat, 2-Hydroxypropyl(meth)acrylat und 1-Hydroxy-isopropyl(meth)acrylat. Geeignete aromatische Vinylmonomere **B4** sind neben Styrol die substituierten Styrole wie p-Methylstyrol, Vinyltoluol, Chlorstyrol und alpha-Methylstyrol.

Werden allein die Polymerisate **BC** eingesetzt, so beträgt deren Viskosität bei Raumtemperatur (23 °C) bevorzugt zwischen 1000 und 10000 mPa·s, besonders bevorzugt zwischen 1500 und 8000 mPa·s, und insbesondere zwischen 2000 und 7000 mPa·s. Der spezifische Epoxidgruppengehalt der Polymerisate **BC** beträgt bevorzugt 1 bis 8 mol/kg, besonders bevorzugt 2 bis 5 mol/kg.

Die Mengen von **B** und **C** und die Zusammensetzung der Monomerenmischung **B** werden bevorzugt so gewählt, daß das Verhältnis der Stoffmenge an Carboxylgruppen der Monomeren **B1** zur Stoffmenge der Epoxidgruppen in **C** 5 bis 15 %, besonders bevorzugt 6 bis 12 % beträgt. Das Verhältnis der Massen von **C** und **B** ist bevorzugt von 3 zu 1 bis 1,1 zu 1, besonders bevorzugt 2,5 zu 1 bis 1,2 zu 1. Die Zusammensetzung der Mischungen ABC wird so gewählt, daß die Viskosität der Mischung der Komponente **A** mit der Komponente **BC** bei 23 °C bevorzugt zwischen 1000 und 10000 mPa·s, besonders bevorzugt zwischen 1500 und 8000 mPa·s, und insbesondere zwischen 2000 und 7000 mPa·s beträgt. Da die Viskosität der Komponente **A** sehr viel niedriger sein kann, ist es bei Zumischung von **A** möglich, höhermolekulare Polymerisate **BC** zu verwenden, die günstigere mechanische Eigenschaften haben. Der spezifische Epoxidgruppengehalt der Mischungen **ABC** beträgt bevorzugt 1 bis 8 mol/kg, besonders bevorzugt 2 bis 5 mol/kg.

Die Polymerisate **BC** lassen sich herstellen, indem ein flüssiges Epoxidharz **C** mit olefinisch ungesättigten Monomeren **B** gemischt wird, die mindestens ein Monomer **B1** enthalten, das aus olefinisch ungesättigten Carbonsäuren mit 3 bis 10 Kohlenstoffatomen ausgewählt ist. Die Polymerisation der Monomeren wird bevorzugt durch Zugabe von Radikal-Initiatoren wie Peroxiden oder aliphatischen Azoverbindungen ausgelöst, wobei diese Radikal-Initiatoren bei erhöhter Temperatur unter Bildung von Radikalen in bekannter Weise 'zerfallen. Der bevorzugte Temperaturbereich ist 100 bis 160 °C. Nach der Vermischung und im Verlauf der Polymerisationsreaktion können die Säuren mit den Epoxiden unter Bildung von Hydroxyestern reagieren, auf diese Weise werden die Komponenten des Polymerisats BC chemisch verknüpft. Nach Abschluß der Polymerisationsreaktion können in bevorzugter Weise weitere Epoxidverbindungen **A** dem Polymerisat **BC** zugemischt werden.

Die Epoxidharz-Zusammensetzungen (Polymerisate **BC** oder Mischungen **ABC)** können auf übliche Weise durch Zusatz von Säuren oder Anhydriden, von Aminen oder sogenannten latenten Härten in der Wärme gehärtet werden. Bevorzugt wird die Härtung mit latenten Härten, insbesondere mit Dicyandiamid, da auf diese Weise Ein-Komponenten-Zusammensetzungen ohne wesentliche Beschränkung der Topfzeit formuliert werden können.

Dabei wird der Massenanteil an Härter zwischen 0,1 % und 20 % gewählt, bevorzugt 0,5 bis 10 %, bezogen auf die Summe der Massen von Epoxidharz-Zusammensetzung und Härter. Gegebenenfalls können auch Beschleuniger für die Härtung zugegeben werden, beispielsweise Imidazol-Derivate oder tertiäre aliphatische Amine.

Die Epoxidharz-Zusammensetzungen können zusätzlich weitere Füllstoffe enthalten, wie Talk, calcinierte Kaoline, Silikate, Kreide, Dolomit, Graphit, Glimmer, Metallpulvern, Glasfasern und gemahlenem Glas, Kieselsäure, insbesondere hochdisperse Kieselsäure und Bentonite. Bevorzugt werden Füllstoffe, deren Teilchengröße nicht mehr als 200 µm beträgt, wobei als Füllstoffe wenigstens einer der Stoffe ausgewählt aus Aluminium- und Zinkpulver, Graphit- und Glimmerpulver oder Mischungen dieser Füllstoffe enthalten sind. Bevorzugt ist die Kombination aus Aluminium- oder Zinkpulver, Graphit oder Glimmer und gegebenenfalls Talkum oder Kreide.

Der Massenanteil an Füllstoffen beträgt mindestens 18 %, und bevorzugt bis zu 80 %. Dabei liegt der Massenanteil des Aluminium- oder Zinkpulvers im Bereich von 1 bis 8 %, der des Graphits oder Glimmers im Bereich von 10 bis 50 %. Den erfindungsgemäßen Massen können auch Pigmente wie Titandioxid, Ruß und Eisenoxidpigmente sowie organische Pigmente wie Azopigmente und Phthalocyanin-Pigmente zugesetzt werden.

Die derart formulierten, gegebenenfalls Füllstoffe enthaltenden Massen können bei Temperaturen von bis zu 140 °C mit einer Schichtdicke von bevorzugt 0,5 bis 5 mm auf die Substrate gespritzt werden und haften hervorragend auf lackierten und unlackierten Blechen, die beispielsweise für Fahrzeuge, insbesondere Automobile, und Haushaltsgeräte verwendet werden.

Die nachfolgenden Beispiele erläutern die Erfindung. Die gemessenen Viskositäten wurden gemäß DIN EN ISO 32190 bei 23 °C und einer Scherrate von 100 s⁻¹ bestimmt.

### Beispiel 1

150 g eines flüssigen Epoxidharzes auf Basis von Bisphenol A mit einem spezifischen Epoxidgruppengehalt von 5,4 mol/kg und 50 g Xylol wurden in einem Reaktionsgefäß vorgelegt und auf Rückflußtemperatur aufgeheizt (ca. 140 bis 145 °C). Während drei Stunden wurde eine Mischung von

| | |
|---|---|
| 55 g | Methylmethacrylat, |
| 10g | Butylacrylat, |
| 40 g | Styrol, |
| 5 g | Acrylsäure und |
| 1,5 g | Di-tert.-Butylperoxid |

gleichmäßig zugetropft. Nach beendeter Zugabe wurden weitere 0,2 g di-tert.-Butylperoxid zugefügt und zwei Stunden bei derselben Temperatur gehalten. Durch Destillation unter vermindertem Druck bei 150 °C wurden Restmonomere und das Lösungsmittel Xylol entfernt; zu dem erkalteten Ansatz wurden 200 g eines Diglycidyläthers von Polypropylenglykol (spezifischer Epoxidgruppengehalt 3,1 mol/kg) zugesetzt. Die Viskosität der Mischung betrug 2200 mPa·s, der spezifische Gehalt an Epoxidgruppen wurde zu 3,0 mol/kg bestimmt.

### Beispiel 2

Es wurde wie im Beispiel 1 verfahren, jedoch wurden 200 g eines Diglycidyläthers von Polypropylenglykol (spezifischer Epoxidgruppengehalt 3,1 mol/kg) vorgelegt und nicht mit Xylol verdünnt. Nach der Entfernung der Restmonomeren durch Destillation unter vermindertem Druck wie im Beispiel 1 wurden hier 150 g des flüssigen Epoxidharzes von Beispiel 1 auf Basis von Bisphenol A mit einem spezifischen Epoxidgruppengehalt von 5,4 mol/kg zugefügt. Die Viskosität der Mischung betrug ca. 6000 mPa·s; der spezifische Gehalt an Epoxidgruppen wurde zu 2,9 mol/kg bestimmt.

### Beispiel 3

Jeweils 100 g der Mischungen aus den Beispielen 1 und 2 wurden mit 3 g Dicyandiamid und 100 g gemahlener Kreide (Teilchengröße unter 50 µm) in einem Kneter vermischt. Die Harz/Härter-Mischung wurde bei 80 °C auf ein unlackiertes Stahlblech gespritzt, mit einer Schichtdicke von 3 mm. Nach ca. 30 Minuten bei 200 °C hatten die Mischungen abgebunden. Die Haftung auf den Blechen war ausgezeichnet. Bei einem Biegeversuch bei - 20 °C riß die Beschichtung an den Biegestellen ein, löste sich jedoch nicht vom Blech. Bei Raumtemperatur und auch bei erhöhter Temperatur (60 °C) hatten die Beschichtungen eine gute Beständigkeit gegen Wasser, verdünnte Alkalien und Säuren, Salzlösungen und Lösungsmittel. Dazu wurden Blankbleche mit einer Schichtdicke von 2,5 mm der Harz-Härter-Mischung beschichtet und einem Schwitzwassertest (Tropentest, DIN 50 017 bzw. ISO 6270) unterworfen. Auch nach 500 Stunden Behandlungszeit zeigte sich keine Korrosion. Gleichartig beschichtete Blankbleche wurden dem Salzsprühtest (ISO 7253) unterworfen. Nach 500 Stunden Behandlungszeit (Abbruch des Tests) zeigte sich keine Korrosion.

### Beispiel 4

Zu den Mischungen aus Beispiel 3 wurde zusätzlich als Beschleuniger 0,2 g ®Curezol C17 C (Imidazolin-Derivat) gegeben, die Massen wurden in einem Kneter vermischt. Die erhaltenen Masse wurden bei 80 °C auf unlackierte Stahlbleche gespritzt. Nach dem Härten (30 Minuten bei 170 °C) zeigte sich eine hervorragende Haftung auf dem Blech, im Biegeversuch bei Raumtemperatur (23 °C) und bei - 20 °C platzte die Beschichtung nicht von der Unterlage ab. Bei Raumtemperatur und auch bei erhöhter Temperatur (60 °C) hatte die Beschichtung eine gute Beständigkeit gegen Wasser, verdünnte Alkalien und Säuren, Salzlösungen und Lösungsmittel. Dazu wurden Blankbleche mit einer Schichtdicke von 2,5 mm der Harz-Härter-Mischung beschichtet und einem Schwitzwassertest (Tropentest, DIN 50 017 bzw. ISO 6270) unterworfen. Auch nach 500 Stunden Behandlungszeit zeigte sich keine Korrosion. Gleichartig beschichtete Blankbleche wurden dem Salzsprühtest (ISO 7253) unterworfen. Nach 500 Stunden Behandlungszeit (Abbruch des Tests) zeigte sich keine Korrosion.

## Patentansprüche

1. Epoxidharz-Zusammensetzung enthaltend ein Polymerisat **BC** von Vinylmonomeren **B**, das in Gegenwart von flüssigen Epoxidharzen **C** polymerisiert ist, sowie gegebenenfalls weitere flüssige Epoxidharze **A**.

2. Epoxidharz-Zusammensetzung nach Anspruch 1, **dadurch gekennzeichnet, daß** die flüssigen Epoxidharze **A** und **C** unabhängig voneinander ausgewählt sind aus Glycidylestern von aliphatischen ein- oder mehrbasigen Carbonsäuren und Glycidyläthern von aliphatischen ein- oder mehrwertigen Alkoholen und Phenolen mit einem spezifischen Epoxidgruppengehalt von 0,5 bis 10 mol/kg.

3. Epoxidharz-Zusammensetzung nach Anspruch 1, **dadurch gekennzeichnet, daß** das Polymerisat **BC** abgeleitet ist von Vinylmonomeren, die Säuregruppen enthalten.

4. Epoxidharz-Zusammensetzung nach Anspruch 1, **dadurch gekennzeichnet, daß** das Polymerisat **BC** abgeleitet ist von Monomeren **B1,** die ausgewählt sind aus olefinisch ungesättigten Carbonsäuren mit 3 bis 10 Kohlenstoffatomen.

5. Epoxidharz-Zusammensetzung nach Anspruch 4, **dadurch gekennzeichnet, daß** das Polymerisat abgeleitet ist von weiteren Vinylmonomeren ausgewählt aus Monomeren **B2** ohne weitere Funktionalität, hydroxyfunktionellen Monomeren **B3,** und aromatischen Vinylmonomeren B4.

6. Epoxidharz-Zusammensetzung nach Anspruch 1, **dadurch gekennzeichnet, daß** sie eine Viskosität, gemessen nach DIN EN ISO 3219 bei 23 °C und 100 s⁻¹, von 1000 bis 10 000 mPa·s aufweisen.

7. Epoxidharz-Zusammensetzung nach Anspruch 1, **dadurch gekennzeichnet, daß** sie zusätzlich Füllstoffe enthalten ausgewählt aus Talk, calcinierten Kaolinen, Silikaten, Kreide, Dolomit, Graphit, Glimmer, Metallpulvern, Glasfasern und gemahlenem Glas, Kieselsäure, insbesondere hochdisperser Kieselsäure und Bentoniten.

8. Verfahren zur Herstellung von Epoxidharz-Zusammensetzungen nach Anspruch 1, **dadurch gekennzeichnet, daß** in Gegenwart eines flüssigen Epoxidharzes **C** durch radikalische Polymerisation von Monomeren enthaltend Säuregruppen-haltige Vinylmonomere **B1** ein Polymer **BC** hergestellt wird.

9. Verfahren nach Anspruch 8, **dadurch gekennzeichnet, daß** das Polymer **BC** mit einem flüssigen Epoxidharz **A** gemischt wird.

10. Verwendung von Epoxidharz-Zusammensetzungen nach Anspruch 1 zur Beschichtung von lackierten oder unlackierten Metallen.
